Europäisches Patentamt

European Patent Office

Office européen des brevets

(11) Publication number: **0 413 570 A2**

# EUROPEAN PATENT APPLICATION

(21) Application number: 90308957.1

(22) Date of filing: **15.08.90**

(51) Int. Cl.5: **H04N 7/13**

(30) Priority: **15.08.89 JP 210447/89**

(43) Date of publication of application:
**20.02.91 Bulletin 91/08**

(84) Designated Contracting States:
**DE FR GB**

(71) Applicant: **SONY CORPORATION**
**7-35, Kitashinagawa 6-chome Shinagawa-ku Tokyo(JP)**

(72) Inventor: **Kageyama, Koji**

c/o Sony Corporation, 7-35 Kitashinagawa
6-chome
Shinagawa-ku, Tokyo(JP)
Inventor: **Gaggioni, Hugo**
c/o Sony Corporation, 7-35 Kitashinagawa
6-chome
Shinagawa-ku, Tokyo(JP)

(74) Representative: **Ayers, Martyn Lewis Stanley et al**
**J.A. KEMP & CO., 14 South Square, Grays Inn London WC1R 5LX(GB)**

(54) **Picture data compression.**

(57) A highly efficient coding apparatus for picture data for splitting an input digital picture signal into component data of plural frequency bands and compressing and encoding the data of the each band, includes an encoder supplied with one or more data containing at least the component data of the band on the lowest frequency side among data of the plural bands and adaptive to dynamic range. The encoder comprises a block segmentation circuit for converting input data into data of a block structure, a detection circuit for detecting a maximum value MAX, a minimum value MIN and a dynamic range DR of the blocks, a subtraction circuit for subtracting the maximum value MAX or the minimum value MIN from the input data, and a quantisation circuit for encoding an output signal of the subtraction circuit to be adaptive to the dynamic range DR.

*Fig. 3*

EP 0 413 570 A2

## PICTURE DATA COMPRESSION

This invention relates to a highly efficient coding apparatus for picture data for compressing the amount of data for a digital picture signal.

Sub-band coding has been proposed as a technique for compressing the amount of transmission data necessary to transmit a picture signal, and involves splitting an input signal into plural frequency bands and encoding the signal of each band; this can reduce the disturbing effect of quantisation noise and decrease the number of bits which the transmitted data contains.

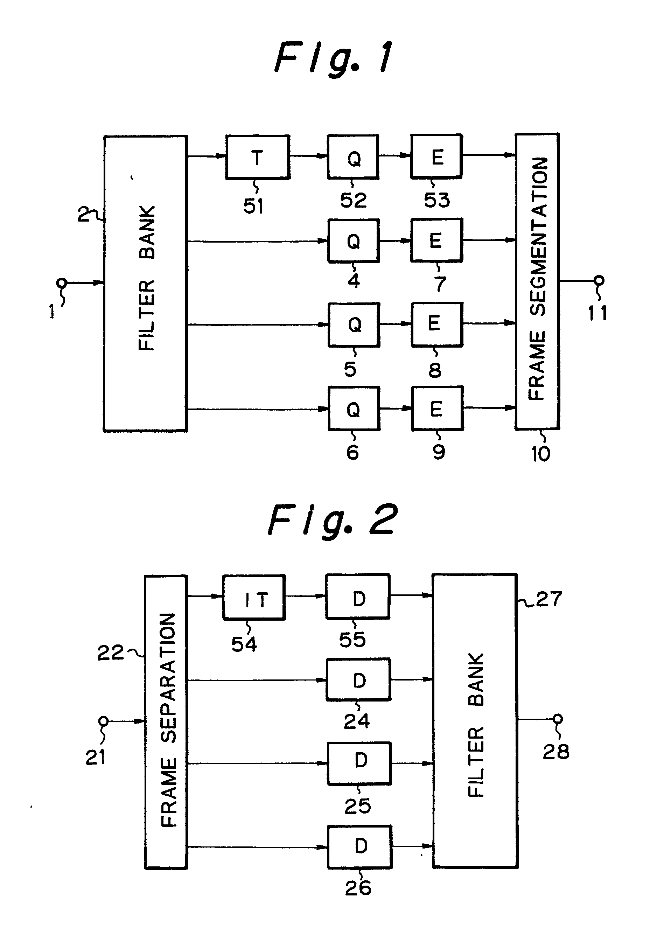

Figure 1 of the accompanying drawings shows a conventional encoding apparatus. A digital picture signal from an input terminal indicated at 1 is supplied to a filter bank 2 and divided into plural frequency bands. The filter bank 2 is a two-dimensional filter and can divide respective bands in the horizontal direction and the vertical direction. The first output signal of the filter bank 2 is provided through a low-pass filter (called "LL components") with respect to both frequency components of the horizontal and vertical frequencies. The second output signal of the filter bank 2 are the "LH" components which are provided through a low-pass filter with respect to the horizontal frequency and a high-pass filter with respect to the vertical frequency. The third output signal is HL components, and the fourth output signal is components.

The LL components which contain much information are supplied to a transformation circuit 51 for DCT (Discrete cosine transform) so that the amount of the information is compressed by the DCT. The transformation circuit 51 includes a block segmentation circuit for converting input data into a block structure of (8 x 8), for example, and by the conversion and encoding of the output signal of the block segmentation circuit, an 8 x 8 matrix of coefficient data is generated from the transformation circuit 51. The coefficient data generated from the transformation circuit 51 is subjected to linear or non-linear step quantisation at a quantisation circuit 53. The output signal of the quantisation circuit 52 is supplied to an encoder 52 which produces variable length codes in a form such as Hufman code.

Other LH components, HL components, HH components other than the LL components are supplied to variable-length encoders 7, 8 and 9 using codes such as Hufman code through quantisation circuits 4, 5 and 6, respectively. Compression of data is carried out by the quantisation circuits 52, 4, 5 and 6 and the encoders 53, 7, 8 and 9. The output signals of the encoders 53, 7, 8 and 9 are converted by a frame segmentation circuit 10 into transmission data and taken out at an output terminal 11.

Figure 2 shows the structure on the reception side corresponding to the transmission side of figure 1. Reception data from an input terminal indicated at 21 is given to a frame separation circuit 22 and divided into the signal of each band. The LL components are supplied to an inverse transformer 54 for cosine conversion, and the decoding of the DCT is carried out. Also, the order of the data is converted into the original one at a block separation circuit. The output signal of the inverse transformer 54 is supplied to a decoder 55 for variable length codes.

The components other than the LL components are supplied to decoders 24, 25 and 26 for variable length codes, respectively. The output signals of the decoders 55, 24, 25 and 26 are fed to a filter bank 27 and combined into a signal of one band in terms of frequencies. Reproduced picture data is provided at an output terminal 28 of the filter bank 27.

Since the above mentioned conventional highly efficient coding apparatus for picture data performs step quantisation of coefficient data provided through the DCT, so that the high frequency side of the LL components is discarded, there is the disadvantage that the definition of the reproduced picture is degraded. Moreover, the hardware of transformer DCT requires a lot of calculation circuits of 14- to 16-bit word length when the quantisation bit number of picture data is 8 bits. Therefore, there is a problem that the hardware size becomes large. Further, when data becomes erroneous due to an error generated in a transmission system, there is the problem that entire blocks are affected by the error since coefficient data of DCT belongs to the frequency region.

An object of the invention is, therefore, to provide a highly efficient coding apparatus in which is the above stated disadvantages inherent in the conventional encoding apparatus by the compression and encoding of low frequency component signals in the level direction are reduced or eliminated.

According to an aspect of the invention there is provided a highly efficient coding apparatus for coding digital picture data to provide compressed picture data, comprising:

filter bank means arranged to be supplied with said digital picture data and for splitting the same into a plurality of component data in different frequency bands;

a plurality of encoding means each of which is arranged to be supplied with respective component data from the filter bank means and for encoding the component data to generate compressed component data; and

combining means for combining the compressed component data from said plurality of encoding means to provide said compressed picture data, wherein at least one of said plurality of encoding means for encoding the component data having the lowest frequency band incudes block segmentation means for forming blocks of component data representing plural picture elements, first and second detecting means for detecting maximum and minimum values, respectively, of the component data representing the plural picture elements in each of said blocks, means for generating dynamic range information for each said block from said maximum and minimum values for the respective block, means for generating modified component data for each said block as the difference between each of the digital picture data and one of said maximum and minimum values for said respective block, means for encoding said modified component data with a digitised bit number less than the number of bits in said component data so as to provide the compressed component data, and output means for outputting the compressed data and an additional code for each said respective block formed of at least two of said maximum and minimum values and a signal corresponding to said dynamic range information.

The invention will be further described by way of non-limitative example with reference to the accompanying drawings, in which:-

Figures 1 and 2 are block diagrams showing respective structures on the transmission and reception sides of one embodiment of the invention;

Figure 3 is a block diagram of a structure on the transmission side of one embodiment of the invention;

Figure 4 is a block diagram of a structure on the reception side of one embodiment of the invention;

Figure 5 is a schematic diagram for explaining a filter bank characteristic;

Figure 6 is a block diagram of one example of an ADRC encoder; and

Figure 7 is a schematic diagram for describing the operation of the ADRC encoder.

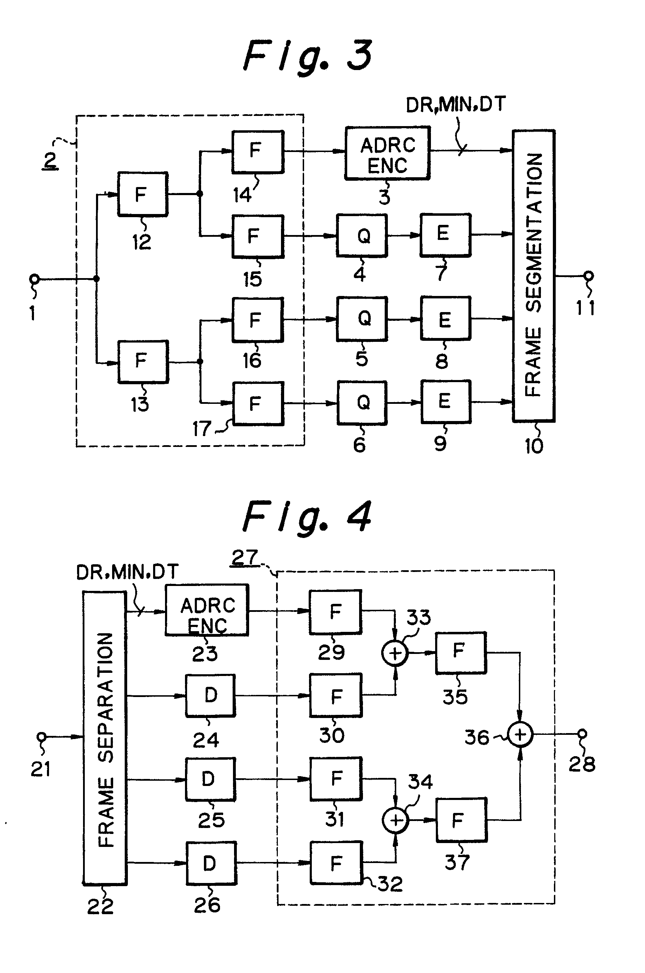

An embodiment of this invention will be described with reference to the drawings hereunder. Fig. 3 shows a structure on the transmission side of one embodiment. In Fig. 3, a digital video signal in which one picture element data is quantized into 8 bits, for example, is supplied to an input terminal indicated at 1. The digital video signal is given to a filter bank 2 encircled by a broken line and divided into data of four bands in the two-dimensional frequency region.

The filter bank 2 is made up of digital filters 12 and 13 to which an input signal is given, digital filters 14 and 15 to which the output signal of the digital filter 12 is supplied, and digital filters 16 and 17 to which the output signal of the digital filter 13 is fed. The digital filter 12 is a low-pass filter in the horizontal direction, and the digital filter 13 is a high-pass filter in the horizontal direction. The digital filters 14 and 16 are low-pass filters in the vertical direction, and the digital filters 15 and 17 are high-pass filters in the vertical direction.

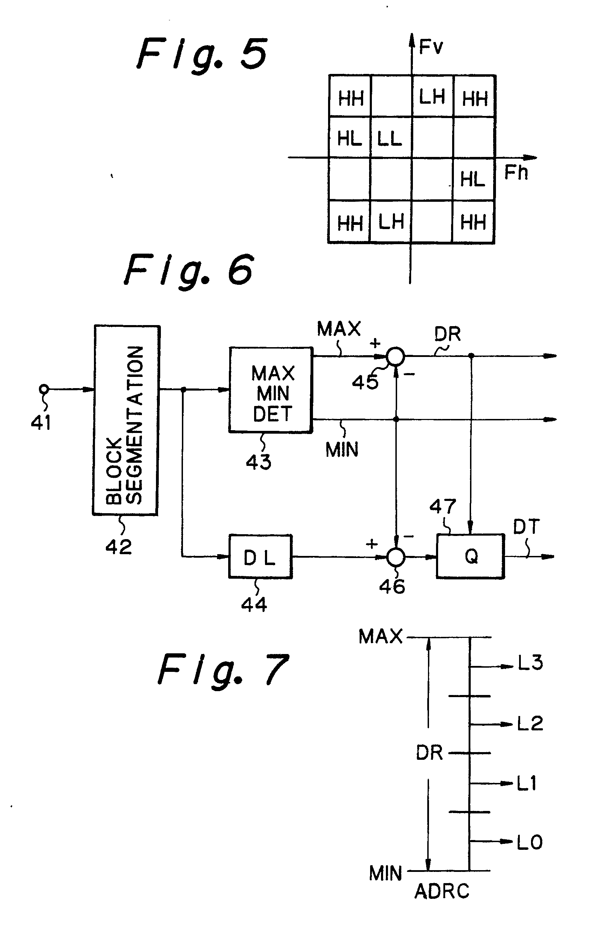

The output signal of th digital filter 14 is a low frequency signal LL indicated by a rectangular area with the origin as its center in Fig. 5 which illustrates a two-dimensional frequency characteristic of a horizontal frequency Fh and a vertical frequency Fv, since the output signal is passed through the low-pass filters in both of the horizontal and vertical direction. The output signal of the digital filter 15 is a signal LH passed through the low-pass filter in the horizontal direction and through the high-pass filter in the vertical direction. The output signal of the digital filter 16 is a signal HL passed through the high-pass filter in the horizontal direction and through the low-pass filter in the vertical direction. The output signal of the digital filter 17 is a signal HH passed through the high-pass filter in the horizontal direction and through the high-pass filter in the vertical direction.

Here, an original signal has a band of 1/2 Fs (Fs: sampling frequency in the horizontal direction and vertical direction.

Each digital filter of the filter bank 2 has a structure for lowering the sampling frequency to 1/4 of that of th original signal. A resampling circuit for altering th sampling frequency to 1/4 may be provided on the output side of the filter bank 2. In this way, with the sampling frequency decreased, the data amount is kept unchanged.

The lowest frequency signal LL among the output signals of the filter bank 2 is supplied to an ADRC encoder 3. The ADRC encoder 3 performs compression and encoding in the level direction of time region, and one example of its structure is shown in Fig. 6. In Fig. 6, the output signal of the digital filter 14 is supplied to an input terminal indicated at 41. The input signal is converted into the order of a two-dimensional block from that of the television scanning by a block segmentation circuit 42. The two-dimensional block has the size of (4 × 4), (8 × 8), etc.

The output signal of the block segmentation circuit 42 is supplied to a maximum value, minimum value detecting circuit 43 and a delay circuit 44. The maximum value MAX and the minimum value MIN of picture data are detected for every block by the detecting circuit 43. The maximum value MAX and the minimum value MIN are supplied to a subtracter 45, and a dynamic range DR, which is a difference between both values, is calculated at the subtracter 45.

The picture data through the delay circuit 44 is given to a subtracter 46, and data which is provided by subtracting the minimum value MIN from the picture data is obtained from the subtracter 46. The subtraction of the minimum value MIN is to normalize picture data in a block, and the picture data may be subtracted from the maximum value MAX. The output signal of the subtracter 46 is supplied to the quantization circuit 47. The dynamic range DR is supplied to the quantization circuit 47. In the quantization circuit 47, post-minimum-value-elimination data is requantized with a bit number less than the original bit number.

Fig. 7 is for explaining the quantization in the case of the bit number of two bits, for example. The dynamic range DR is divided into four, and the quantization step size is obtained. Picture data from the subtracter 46 is divided by the quantization step size, and its quotient is made to an integer by the omitting process to provide a two-bit code signal DT (00) (10) (01) or (11). The quantization circuit 47 is composed of a dividing circuit or an ROM. In Fig. 7, representative values L0, L1, L2 and L3 indicate reproduction levels on the decoding side.

The dynamic range DR, the minimum value MIN and the code signal DT are transmitted. For the transmission of the dynamic range information, two pieces of information may be sent among the dynamic range DR, the maximum value MAX and the minimum value MIN. The ADRC compresses the data amount to be sent using the facts that a partial picture of block size has correlation in the level direction and that generating distortion can be decreased even if the quantization is done with the bit number less than the original bit number.

The output signal (code signal DT, dynamic range DR and the minimum value MIN) from the ADRC encoder 3 is given to a frame segmentation circuit 10 as shown in Fig. 3.

Signal components of other bands of the filter bank 2 are supplied to quantization circuits 4, 5 and 6, respectively. The quantization circuits 4, 5 and 6 perform requantization of input data with a bit number less than the original one. Namely, the quantization circuits 4, 5 and 6 perform step quantization. The width of a dead zone where the step size and quantization output become zero is set at an optimal one. The output signals of the respective quantization circuits 4, 5 and 6 are given to variable length code encoders 7, 8 and 9 for Hafman code, etc. Compression of a data amount is performed with the processing of the quantization circuits 4, 5 and 6 and the encoders 7, 8 and 9. The output signals of these encoders 7, 8 and 9 are supplied to the frame segmentation circuit 10. The frame segmentation circuit 10 converts an encoded signal of each band into transmission data of one channel. Transmission data taken out to an output terminal 11 of the frame segmentation circuit 10 is transmitted or recorded.

Fig. 4 shows a structure on the reception side which makes a pair with the structure on the transmission side shown in Fig. 3. Reception data is given to a frame separation circuit 22 from an input terminal 21 and desegmented into an encoded signal of each band. The encoded signals of other bands are supplied to variable length code decoders 24, 25 and 26, respectively.

An ADRC decoder 23 is a circuit for obtaining a post-minimum-value-elimination value on the basis of a dynamic range DR and a code signal DT by an ROM, a multiplier, etc. and adding to this value the minimum value MIN to generate a reproduction level. A block separation circuit is provided at the ADRC decoder 23 to convert data arranged in the order of blocks into the original order. The output signal of the ADRC decoder 23 and the respective output signals of the decoders 24, 25 and 26 are supplied to a filter bank 27 encircled by a broken line.

The output signal of the ADRC decoder 23 is supplied to an adder 33 through a digital filter 29 which is a low-pass filter in the vertical direction. The output signal of the decoder 24 is given to the adder 33 through a digital filter 30 which is a high-pass filter in the vertical direction. The output signal of the decoder 25 is fed to an adder 34 through a digital filter 31 which is a low-pass filter in the vertical direction. The output signal of the decoder 26 is given to the adder 34 through a digital filter 32 which is a high-pass filter in the vertical direction. The output signal of the adder 33 is supplied to an adder 36 through a digital filter 35 which is a low-pass filter in the horizontal direction, and the output signal of the adder 34 is fed to an adder 36 through a digital filter 37 which is a high-pass filter in the horizontal direction. The output signal of the adder 36 is taken out at an output terminal 28.

Each digital filter of the filter bank 27 functions to carry out an interpolation and convert a sampling frequency into that of the original signal. An interpolating circuit may be provided separately on the output side of the filter bank 27. Further, the filter bank 2 on the transmission side and the filter bank 27 on the reception side have a relationship where they can be reconstructed. Clearly, when four output signals of the filter bank 2 are directly supplied to four input terminals of the filter bank 27, the same output signals for the input signals to the filter bank 2 can be provided from the filter bank 27.

Here, signals of other bands as well as signal components of the lowest band may be encoded at the ADRC. Also, the ADRC may perform quantization at a variable length (for example, a bit number of 0, 1, 2, 3 or 4 bits) depending on a three-dimensional block ADRC and a dynamic range DR.

Since this invention compresses low frequency components having the greatest information amount in the level direction by ADRC, the degradation of definition is less, the hardware size is small, and an error of a code signal is not propagated in a block as compared with a conventional system using cosine conversion.

Having described a specific preferred embodiment of the present invention with reference to the accompanying drawings, it is to be understood that the invention is not limited to that precise embodiment, and that various changes and modifications may be effected therein by one skilled in the art without departing from the scope of the invention as defined in the appended claims.

## Claims

1. A highly efficient coding apparatus for coding digital picture data to provide compressed picture data, comprising:
filter bank means arranged to be supplied with said digital picture data and for splitting the same into a plurality of component data in different frequency bands;
a plurality of encoding means each of which is arranged to be supplied with respective component data from the filter bank means and for encoding the component data to generate compressed component data; and
combining means for combining the compressed component data from said plurality of encoding means to provide said compressed picture data, wherein at least one of said plurality of encoding means for encoding the component data having the lowest frequency band incudes block segmentation means for forming blocks of component data representing plural picture elements, first and second detecting means for detecting maximum and minimum values, respectively, of the component data representing the plural picture elements in each of said blocks, means for generating dynamic range information for each said block from said maximum and minimum values for the respective block, means for generating modified component data for each said block as the difference between each of the digital picture data and one of said maximum and minimum values for said respective block, means for encoding said modified component data with a digitised bit number less than the number of bits in said component data so as to provide the compressed component data, and output means for outputting the compressed data and an additional code for each said respective block formed of at least two of said maximum and minimum values and-a signal corresponding to said dynamic range information.

2. A highly efficient coding apparatus according to claim 1, wherein said filter bank means includes horizontal filter means and vertical filter means.

3. A highly efficient coding apparatus according to claim 2, wherein said filter bank means includes horizontal low-pass filter means and horizontal high-pass filter means each being supplied with said digital picture data, first vertical low-pass filter means and first vertical high-pass filter means, each being connected to said horizontal low-pass filter means , and second vertical low-pass filer means and second vertical high-pass filter means, each being connected to said horizontal high-pass filter means, and said component data having the lowest frequency band is the output of said first vertical low-pass filter means.

4. A highly efficient coding apparatus according to any one of claims 1 to 3, wherein at least one other one of said encoding means includes a re-quantising means and a variable length coding means.

5. A highly efficient coding apparatus according any one of the preceding claims, wherein said filter bank means includes means for reducing the sampling frequency of said component data.

6. A decoding apparatus for decoding a signal compressed by the apparatus of any one of claims 1 to 5 and including respective means for decoding the data encoded by the encoding means, including means responsive to said additional code to decode the modified component data and means for combining the data from the respective decoding means, thereby to decompress the picture signal.

# *Fig. 1*

# *Fig. 2*

# Fig. 3

# Fig. 4

## Fig. 5

## Fig. 6

## Fig. 7